# FASCICULE DE BREVET EUROPEEN

(11) **EP 2 301 328 B1**
(45) Date de publication et mention de la délivrance du brevet: **09.05.2012**
(21) Numéro de dépôt: 10306017.4
(22) Date de dépôt: 22.09.2010
(51) Int. Cl.: A01K 5/01

(54) **Râtelier destiné à recevoir du fourrage pour nourrir des animaux**
Futterraufe zum Füttern von Tieren
Feed rack for holding forage for feeding animals

(30) Priorité: 25.09.2009 FR 0956669
(43) Date de publication de la demande: 30.03.2011
(73) Titulaire: Cosnet, 72550 Coulans Sur Gee (FR)
(72) Inventeur: COSNET, Gilbert, 72550, DEGRE (FR)
(74) Mandataire: Michelet, Alain

(56) Documents cités:
- DE-U1- 20 120 327
- FR-A1- 2 689 368
- US-A1- 2006 070 580

## Description

La présente invention concerne un râtelier destiné à recevoir du fourrage pour nourrir des animaux.

La plupart des râteliers sont au moins partiellement démontables pour réduire leur encombrement dans le cadre de leur stockage ou de leur transport entre deux sites (voir par exemple le râtelier décrit dans le document US-2006/0070580).

Mais les structures de râtelier existantes occupent néanmoins un volume important une fois démontées, ce qui nuit à l'optimisation des coûts de transport.

Pour pallier à cet inconvénient, la demanderesse a développé une structure de râtelier, sous la forme d'un ensemble prêt à assembler ou à monter, qui est conditionnable à plat selon un volume réduit ; cette structure démontée permet ainsi une réduction importante de son encombrement et une baisse significative des coûts de stockage et de transport.

A cet effet, le râtelier selon l'invention, destiné à recevoir du fourrage pour nourrir des animaux, est du type de celui décrit dans le document précité US-2006/0070580 en ce sens qu'il comprend :
- une structure de fond comportant, d'une part, un élément de plancher en forme de parallélogramme, délimité par quatre côtés et comportant quatre angles, et d'autre part, un cadre périphérique formant rehausse dudit plancher, constitué de quatre côtés de cadre qui prolongent chacun vers le haut l'un desdits côtés de plancher,
- des barrières prolongeant vers le haut chacun desdits côtés de cadre, lesdites barrières étant portées par des montants associés à ladite structure de fond et situés au niveau des angles dudit plancher,
- une structure inférieure de piètement reposant sur le sol, et
- une structure de toiture,
en outre, ce râtelier comporte encore, d'une part, des moyens d'assemblage pour autoriser le montage/démontage dudit plancher par rapport audit cadre périphérique, et d'autre part, des moyens d'assemblage pour autoriser le montage/démontage desdits côtés de cadre les uns par rapport aux autres.
Et conformément à l'invention, les extrémités de deux côtés de cadre à l'équerre sont fixées sur un même montant d'angle, par le biais de moyens de solidarisation amovible.

Une telle structure permet une réduction optimale de l'encombrement du râtelier démonté, en vue de son stockage ou de son transport.

Selon une forme de réalisation préférée, les extrémités attenantes de deux côtés de cadre à l'équerre sont fixées indépendamment l'une de l'autre sur un même montant d'angle ; dans le cas où les montants d'angle comportent quatre faces et une section carrée, les extrémités des côtés de cadre ont chacune avantageusement une forme générale de cornière de sorte à coopérer chacune avec deux desdites faces d'un même montrant d'angle.

D'autres caractéristiques intéressantes de l'invention, pouvant être prises en combinaison ou indépendamment sont listées ci-après :
- les côtés de cadre comportent chacun, soit une plaque de tôle s'étendant verticalement, et dont les bordures longitudinales comportent un pli à l'équerre, orienté intérieurement, soit au moins deux traverses agencées parallèlement et à distance, reliées par des profilés d'extrémité ; dans ce cas, les côtés de cadre en plaque de tôle comportent avantageusement deux extrémités formant chacune une sorte de cornière constituée par un prolongement de la plaque de tôle et par les arêtes d'extrémité des plis en regard, et d'autre part, les côtés de cadre à traverses comportent avantageusement des profilés en forme de cornière en L ;
- les barrières, la structure de toit et la structure de piètement sont associés avec les montants d'angle par le biais de moyens de solidarisation amovible ; de préférence, la structure de toit comprend deux arceaux, adaptés pour recevoir un panneau de toit rapporté et comportant deux tubes destinés à s'emmancher dans l'extrémité supérieure de deux des montants d'angle, et la structure de piètement est constituée par deux arceaux dont les extrémités sont emmanchées dans l'extrémité inférieure de deux des montants d'angle ;
- les quatre barrières latérales s'étendent chacune au-dessus de l'un des côtes de cadre support, et elles sont avantageusement chacune constituées de festons montés sur une traverse inférieure qui se prolonge sur les côtés par deux montants de fixation aptes à être solidarisés chacun avec l'un des montants d'angle du râtelier ;
- le plancher est plan et il comporte en son milieu une ouverture pour le positionnement optimal du fourrage, en particulier une balle de fourrage cylindrique.

La présente invention concerne également l'assemblage prêt à monter pour constituer un râtelier tel que défini ci-dessus.

L'invention sera encore illustrée, sans être aucunement limitée, par la description suivante en relation avec les figures annexées dans lesquelles :

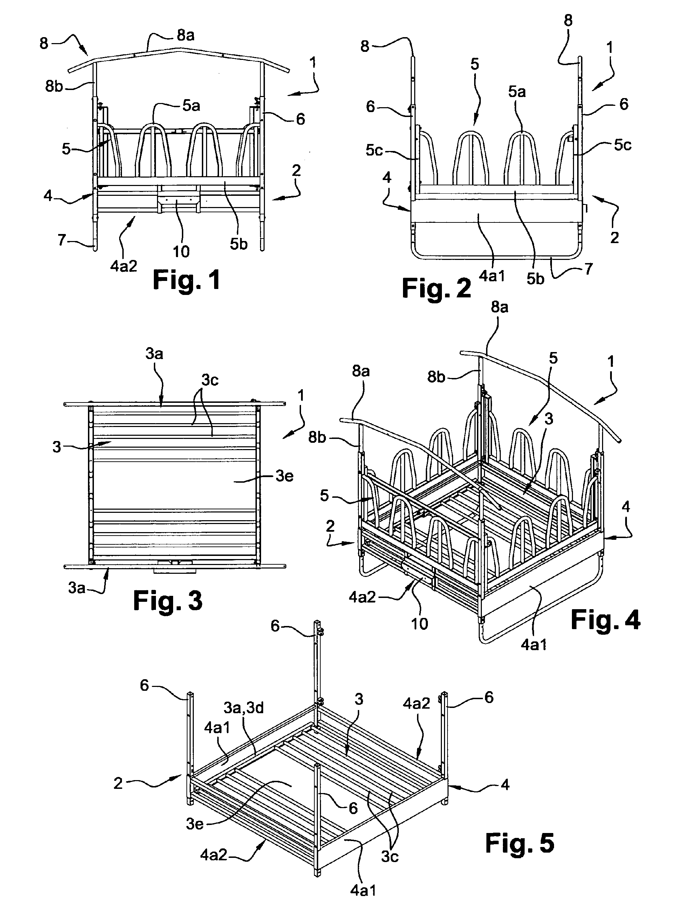

- la figure 1 est une vue avant du râtelier selon l'invention, côté organe d'attelage à un véhicule tracteur ;
- la figure 2 est une vue de côté du râtelier selon l'invention ;
- la figure 3 est une vue de dessus du râtelier selon l'invention ;
- la figure 4 est une vue en perspective du râtelier selon l'invention (sans le panneau de toit) ;
- la figure 5 est une vue en perspective de l'élément de plancher du râtelier, sur lequel sont rapportés les montants d'angle par l'intermédiaire du cadre support ;

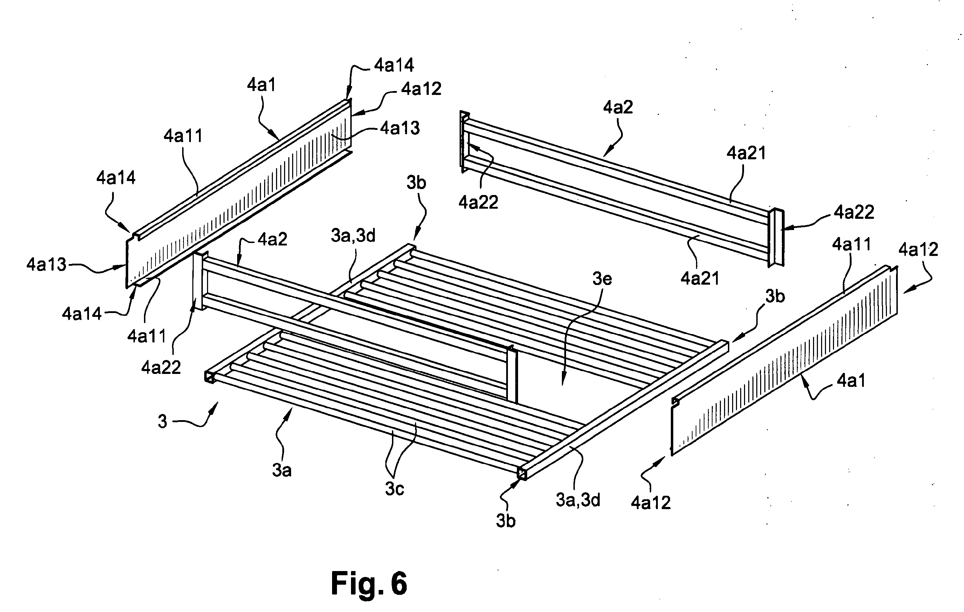

- la figure 6 est une vue en perspective et éclatée de l'élément de plancher et du cadre support.

Le râtelier 1 selon l'invention comprend :
- une structure de fond 2 comportant, d'une part, un élément de plancher 3 en forme de parallélogramme, délimité par quatre côtés 3a et comportant quatre angles 3b, et d'autre part, un cadre périphérique 4 formant rehausse du plancher 3, constitué de quatre côtés de cadre 4a qui prolongent chacun vers le haut l'un desdits côtés de plancher 3a,
- des barrières 5 prolongeant vers le haut chacun desdits côtés de cadre 4a, lesdites barrières 5 étant portées par des montants 6 associés à ladite structure de fond 2 et situés au niveau des angles 3b dudit plancher 3,
- une structure inférieure de piètement 7 reposant sur le sol, et
- une structure de toiture 8.

Le cadre support 4 porte de manière amovible, d'une part, le plancher 3 et, d'autre part, les quatre montants ou poteaux indépendants 6 qui sont localisés au niveau de chacun des angles de plancher 3b.

Ces montants d'angle 6 reçoivent, de manière amovible, les barrières 5, la structure de piètement 7 et la structure de toiture 8.

La structure de fond 2 est réalisée en plusieurs pièces 3 et 4a associées de manière amovible, contribuant à optimiser le transport à plat du râtelier et à limiter son encombrement.

Pour cela, le râtelier 1 comporte, d'une part, des moyens d'assemblage pour autoriser le montage/démontage du plancher 3 par rapport au cadre périphérique 4, et d'autre part, des moyens d'assemblage pour autoriser le montage/démontage des côtés de cadre 4a les uns par rapport aux autres.

Ce cadre support 4 est constitué par un assemblage de quatre côtés de cadre 4a, s'étendant chacun le long de l'un des côtés de plancher 3a.

Certains au moins de ces cotés de cadre 4a reçoivent et portent les côtés 3a associés du plancher 3.

Deux des côtés de cadre 4a1 en regard consistent ici en des plaques de tôle s'étendant verticalement, et dont les bordures longitudinales inférieure et supérieure sont chacune munies d'un pli à l'équerre 4a11, orienté côté intérieur du râtelier. L'extrémité 4a12 de ces plaques 4a1 comporte une sorte de cornière constituée par un prolongement 4a13 de la plaque de tôle et par les arêtes d'extrémité 4a14 des plis 4a11 en regard.

En l'occurrence, les plis à l'équerre inférieurs 4a11 servent ici de moyens d'assemblage au plancher 3. Ces plis 4a11 forment des cornières d'appui sur lesquelles viennent reposer les côtés 3a en regard du plancher 3 ; des moyens de solidarisation amovible (goupilles ou boulons par exemple) peuvent être utilisés pour assembler le plancher 3 avec les côtés de cadre 4a.

Les deux autres côtés de cadre 4a2 comportent chacun deux traverses 4a21 agencées parallèlement et en regard, dans un plan orienté verticalement, dont les extrémités en regard sont reliées par deux profilés 4a22 en forme de cornières en L.

A titre de variante, les quatre côtés de cadre 4a peuvent être constitués par des éléments en tôle ou par des éléments barreaudés avec tronçons et cornières.

Les côtés de cadre 4a peuvent coopérer avec le plancher 3 par tout autre moyen d'assemblage amovible, par exemple par boulonnage, goupilles, etc.

Les deux extrémités 4a12 et 4a22 de deux côtés de cadre 4a coopèrent chacune avec l'un des montants 6.

Les extrémités attenantes 4a12 et 4a22 de deux côtés de cadre 4a à l'équerre sont fixées de manière amovible sur un même montant d'angle 6, pour assurer son maintien à la verticale.

Les moyens de fixation peuvent être choisis par l'homme du métier, par exemple du type boulonnage.

En l'occurrence, les montants 6 comportent quatre faces, avec une section carrée. Les extrémités 4a12 et 4a22 des côtés de cadre 4a se présentent sous une forme générale de cornière coopérant chacune avec deux des faces d'un même montant 6 ; l'extrémité 4a12 ou 4a22 d'un côté de cadre 4a coopère avec deux des faces d'un montant 6, et l'extrémité attenante 4a12 ou 4a22 du côté de cadre à l'équerre 4a coopère avec les deux autres faces du même montant 6.

Les côtés de cadre 4a sont éventuellement du type ouvrant, notamment pour faciliter l'accès au plancher.

Le plancher 3 consiste ici en une structure barreaudée formée de plusieurs barreaux parallèles 3c assemblés par deux traverses d'extrémité 3d ; une ouverture 3e est prévue en son centre, pour centrer les balles de fourrage cylindriques rapportées.

A titre de variante, ce plancher peut-être constitué d'une tôle métallique, éventuellement munie de plis de rigidification sur son pourtour (avec, de préférence une ouverture centrale pour le centrage du fourrage en balle).

La structure de toit 8 consiste ici en deux arceaux 8a, rapportés sur deux montants 6 en regard, adaptés pour recevoir un panneau de toit rapporté (non représenté). Ces arceaux 8a comportent chacun deux tubes 8b destinés à s'emmancher dans l'extrémité supérieure de deux montants d'angle 6 ; cet assemblage est de préférence réglable en hauteur au moyen d'un système vis/écrou coopérant avec un jeu d'orifices superposés.

La structure de piètement 7 est constituée par deux arceaux dont les extrémités sont emmanchées dans l'extrémité inférieure de deux montants d'angle 6 ; cet assemblage est de préférence réglable en hauteur au moyen d'un système vis/écrou coopérant avec un jeu d'orifices superposés.

De préférence, les arceaux de piètement 7 sont fixés le long de deux côtés parallèles du râtelier, et les arceaux de toit 8a sont fixés le long des deux autres côtés parallèles.

L'un des côtés de cadre 4a, en l'occurrence l'un des côtés de cadre barreaudé 4a2, est équipé d'un organe d'attelage 10, pour la prise en charge du râtelier 1 par un véhicule tracteur.

Les quatre barrières latérales 5 s'étendent chacune au-dessus de l'un des côtes de cadre support 4a ; elles sont chacune constituées de festons 5a montés sur une traverse inférieure 5b qui se prolonge sur les côtés par deux montants de fixation 5c aptes à être solidarisés chacun avec l'un des montants d'angle 6.

L'une des barrières 5, de préférence celle opposée à l'organe d'attelage 10, est montée pivotante : elle comporte pour cela un montant de fixation 5c qui est assemblé de manière pivotante sur l'un des montants d'angle 6, au moyen de charnières par exemple ; son autre montant de fixation 5c coopère avec le montant d'angle juxtaposé 6 par l'intermédiaire de moyens de verrouillage activables/désactivables, par exemple du type verrou.

## Revendications

1. Râtelier destiné à recevoir du fourrage pour nourrir des animaux, lequel râtelier (1) comprend :
- une structure de fond (2) comportant, d'une part, un élément de plancher (3) en forme de parallélogramme, délimité par quatre côtés (3a) et comportant quatre angles (3b), et d'autre part, un cadre périphérique (4) formant rehausse du plancher, constitué de quatre côtés de cadre (4a) qui prolongent chacun vers le haut l'un desdits côtés de plancher (3a),
- des barrières (5) prolongeant vers le haut chacun desdits côtés de cadre (4a), lesdites barrières (5) étant portées par des montants (6) associés à ladite structure de fond (2) et situés au niveau des angles (3b) dudit plancher (3),
- une structure inférieure de piètement (7) reposant sur le sol, et
- une structure de toiture (8),
lequel râtelier comporte, d'une part, des moyens d'assemblage pour autoriser le montage/démontage dudit plancher (3) par rapport audit cadre périphérique (4), et d'autre part, des moyens d'assemblage pour autoriser le montage/démontage desdits côtés de cadre (4a) les uns par rapport aux autres, **caractérisé en ce que** les côtés de cadre (4a) comportent chacun deux extrémités (4a12, 4a22), et **en ce que** lesdites extrémités (4a12, 4a22) de deux côtés de cadre (4a) à l'équerre sont fixées, par le biais de moyens de solidarisation amovible, sur un même montant d'angle (6).

2. Râtelier selon la revendication 1, **caractérisé en ce que** les extrémités attenantes (4a12, 4a22) de deux côtés de cadre (4a) à l'équerre sont fixées indépendamment l'une de l'autre sur un même montant d'angle (6).

3. Râtelier selon la revendication 2, **caractérisé en ce que** les montants d'angle (6) comportent quatre faces et une section carrée, et **en ce que** les extrémités (4a12, 4a22) des côtés de cadre (4a) ont chacune une forme générale de cornière de sorte à coopérer chacune avec deux desdites faces d'un même montant (6).

4. Râtelier selon l'une quelconque des revendications 1 à 3, **caractérisé en ce que** les côtés de cadre (4a) comportent chacun, soit une plaque de tôle (4a1) s'étendant verticalement, et dont les bordures longitudinales comportent un pli à l'équerre (4a11), orienté intérieurement, soit au moins deux traverses (4a21) agencées parallèlement et à distance reliées par des profilés d'extrémité (4a22).

5. Râtelier selon les revendications 3 et 4 prises en combinaison, **caractérisé en ce que** les côtés de cadre (4a1) en plaque de tôle comportent deux extrémités (4a12) formant chacune une sorte de cornière constituée par un prolongement (4a13) de la plaque de tôle et par les arêtes d'extrémité (4a14) des plis en regard (4a11), et **en ce que** les côtés de cadre à traverses (4a2) comportent des extrémités (4a22) formées par des profilés en forme de cornière en L.

6. Râtelier selon l'une quelconque des revendications 1 à 5, **caractérisé en ce que** les barrières (5), la structure de toit (8) et la structure de piètement (7) sont associés, par le biais de moyens de solidarisation amovible, avec les montants d'angle (6).

7. Râtelier selon la revendication 6, **caractérisé en ce que** la structure de toit (8) comprend deux arceaux (8a), adaptés pour recevoir un panneau de toit rapporté et comportant deux tubes (8b) destinés à s'emmancher dans l'extrémité supérieure de deux des montants d'angle (6), et **en ce que** la structure de piètement (7) est constituée par deux arceaux dont les extrémités sont emmanchées dans l'extrémité inférieure de deux des montants d'angle (6).

8. Râtelier selon l'une quelconque des revendications 1 à 7, **caractérisé en ce que** les quatre barrières latérales (5) s'étendent chacune au-dessus de l'un des côtes de cadre support (4a), et sont chacune constituées de festons (5a) montés sur une traverse inférieure (5b) qui se prolonge sur les côtés par deux montants de fixation (5c) aptes à être solidarisés chacun avec l'un des montants d'angle (6) du râtelier.

9. Râtelier selon l'une quelconque des revendications 1 à 8, **caractérisé en ce que** le plancher (3) est plan, et comporte en son milieu une ouverture (3e) pour le positionnement optimal du fourrage, en particulier une balle de fourrage cylindrique.

10. Assemblage prêt à monter pour constituer un râtelier (1) selon l'une quelconque des revendications 1 à 9.

## Claims

1. A feeding rack for receiving forage for feeding animals, said feeding rack (1) comprising:
- a bottom structure (2) comprising, on the one hand, a parallelogram-shaped floor element (3), delimited by four sides (3a) and comprising four corners (3b), and on the other hand, a floor-riser peripheral frame (4), consisted of four frame sides (4a) that each extend upwardly one of said floor sides (3a),
- barriers (5) extending upwardly each of said frame sides (4a), said barriers (5) being carried by columns (6) associated with said bottom structure (2) and located at the corners (3b) of said floor (3),
- a lower base structure (7) standing on the ground, and
- a roof structure (8),
wherein said feeding rack comprises, on the one hand, assembly means for allowing the mounting/dismounting of said floor (3) with respect to said peripheral frame (4), and on the other hand, assembly means for allowing the mounting/dismounting of said frame sides (4a) with respect to each other, **characterized in that** the frame sides (4a) each comprise two ends (4a12, 4a22), and **in that** said ends (4a12, 4a22) of two frame sides (4a) perpendicular to each other are attached, through removable fastening means, to a same corner column (6).

2. A feeding rack according to claim 1, **characterized in that** the adjacent ends (4a12, 4a22) of two frame sides (4a) perpendicular to each other are attached independently from each other to a same corner column (6).

3. A feeding rack according to claim 2, **characterized in that** the corner columns (6) have four faces and a square section, and **in that** the ends (4a12, 4a22) of the frame sides (4a) each generally have an angle-iron shape, so as to each cooperate with two of said faces of a same column (6).

4. A feeding rack according to any one of claims 1 to 3, **characterized in that** the frame sides (4a) each comprise either a sheet metal plate (4a1) extending vertically, and the longitudinal edges thereof comprise a square fold (4a11), orientated inwardly, or at least two traverses (4a21) arranged parallel to and distant from each other, connected by end profiles (4a22).

5. A feeding rack according to claims 3 and 4 taken in combination with each other, **characterized in that** the frame sides (4a1) made of sheet metal plates comprise two ends (4a12) each forming a kind of angle steel consisted by an extension (4a13) of the sheet metal plate and by the end edges (4a14) of the opposite folds (4a11), and **in that** the frame sides (4a2) made of traverses comprise ends (4a22) formed by L-shaped profiles.

6. A feeding rack according to any one of claims 1 to 5, **characterized in that** the barriers (5), the roof structure (8) and the base structure (7) are associated, through removable fastening means, with the corner columns (6).

7. A feeding rack according to claim 6, **characterized in that** the roof structure (8) comprises two bows (8a), adapted to receive an added-on roof panel and comprising two tubes (8b) intended to fit into the upper end of two of the corner columns (6), and **in that** the base structure (7) is consisted by two bows whose ends are fitted into the lower end of two of the corner columns (6).

8. A feeding rack according to any one of claims 1 to 7, **characterized in that** the four lateral barriers (5) each extend above one of the support frame sides (4a), and are each consisted of festoons (5a) mounted on a lower traverse (5b) that is extended on its sides by two attaching columns (5c) each capable of being fastened to one of the corner columns (6) of the feeding rack.

9. A feeding rack according to any one of claims 1 to 8, **characterized in that** the floor (3) is planar and comprises in the middle thereof an opening (3e) for the optimal positioning of the forage, in particular a cylindrical bale of forage.

10. A kit assembly for forming a feeding rack (1) according to any one of claims 1 to 9.

## Patentansprüche

1. Futterraufe zum Füttern von Tieren, wobei die Futterraufe (1) folgendes umfasst:
- eine Bodenkonstruktion (2) mit, einerseits, einem Bodenelement (3) in Form eines Parallelogrammes, begrenzt durch vier Seiten (3a), und mit vier Ecken (3b), und andererseits einem Umfangsrahmen (4), der einen Aufsatz auf dem Boden bildet, bestehend aus vier Seiten des Rahmens (4a), die jeweils eine der Seiten des Bodens (3a) nach oben verlängern,
- Einzäunungen (5), die jede der Seiten des Rahmens (4a) nach oben verlängern, wobei die Einzäunungen (5) von Stützen (6) gehalten werden, die mit der Bodenkonstruktion (2) verbunden sind und sich im Bereich der Ecken (3b) des Bodenelementes (3) befinden,
- eine Fußgestellkonstruktion (7), die auf dem Boden ruht, und
- eine Dachkonstruktion (8),
wobei die Futterraufe einerseits Montageelemente umfasst, um die Montage/Demontage des Bodens (3) gegenüber dem Umfangsrahmen (4) zu ermöglichen, und andererseits Montageelemente, um die Montage/Demontage der Seiten des Rahmens (4a) zueinander zu ermöglichen, **dadurch gekennzeichnet, dass** die Seiten des Rahmens (4a) jeweils zwei Enden (4a12, 4a22) umfassen, und dass diese Enden (4a12, 4a22) der beiden Seiten des Rahmens (4a) im rechten Winkel mit Hilfe von abnehmbaren Verbindungselementen an der gleichen Eckstütze (6) befestigt sind.

2. Futterraufe nach einem der Ansprüche 1 bis 3, **dadurch gekennzeichnet, dass** die angrenzenden Enden (4a12, 4a22) der beiden Seiten des Rahmens (4a) im rechten Winkel unabhängig voneinander an der gleichen Eckstütze (6) befestigt sind.

3. Futterraufe nach Anspruch 2, **dadurch gekennzeichnet, dass** die Eckstützen (6) vier Seiten und einen viereckigen Abschnitt umfassen, und die Enden (4a12, 4a22) der Seiten des Rahmens (4a) jeweils die allgemeine Form einer Eckleiste besitzen, so dass sie jeweils mit zwei Seiten der gleichen Stütze (6) zusammenwirken.

4. Futterraufe nach einem der Ansprüche 1 bis 3, **dadurch gekennzeichnet, dass** die Seiten des Rahmens (4a) jeweils entweder ein Blech (4a1) aufweisen, das vertikal verläuft, und dessen längs verlaufende Kanten einen nach innen gerichteten, rechtwinkligen Falz (4a11) besitzen, oder mindestens zwei Querträger (4a21), die parallel und im Abstand angeordnet und durch Profile an den Enden (4a22) verbunden sind.

5. Futterraufe nach den Ansprüchen 3 und 4 in Kombination, **dadurch gekennzeichnet, dass** die Seiten des Rahmens (4a1) aus Blech zwei Enden (4a12) aufweisen, die jeweils eine Art Eckleiste bilden, die aus einer Verlängerung (4a13) des Bleches und aus den Endkanten (4a14) der einander zugewandten Falze (4a11) besteht, und dass die Seiten des Rahmens aus Querträgern (4a2) Enden (4a22) aufweisen, die aus Profilen in Form einer L-förmigen Eckleiste gebildet sind.

6. Futterraufe nach einem der Ansprüche 1 bis 5, **dadurch gekennzeichnet, dass** die Einzäunungen (5), die Dachkonstruktion (8) und die Fußgestellkonstruktion (7) mit Hilfe von abnehmbaren Verbindungselementen mit den Eckstützen (6) verbunden sind.

7. Futterraufe nach Anspruch 6, **dadurch gekennzeichnet, dass** die Dachkonstruktion (8) zwei Bögen (8a) besitzt, die eine angesetzte Dachplatte aufnehmen können, und zwei Rohre (8b) aufweisen, die in das obere Ende der beiden Eckstützen (6) eingesteckt werden, und dass die Fußgestellkonstruktion (7) aus zwei Bögen besteht, deren Enden in das untere Ende der beiden Eckstützen (6) eingesteckt werden.

8. Futterraufe nach einem der Ansprüche 1 bis 7, **dadurch gekennzeichnet, dass** die vier seitlichen Einzäunungen (5) jeweils über einer der Seiten des Tragrahmens (4a) verlaufen, und jeweils aus bogenförmigen Elementen (5a) bestehen, welche an einem unteren Querträger (5b) montiert sind, der sich an den Seiten durch zwei Befestigungsstützen (5c) verlängert, die jeweils mit einer der Eckstützen (6) der Futterraufe verbunden werden können.

9. Futterraufe nach einem der Ansprüche 1 bis 8, **dadurch gekennzeichnet, dass** der Boden (3) eben ist und in seiner Mitte eine Öffnung (3e) für die optimale Positionierung des Futter, insbesondere für einen zylinderförmigen Futterballen, besitzt.

10. Montagefertige Anordnung zum Aufbau einer Futterraufe (1) nach einem der Ansprüche 1 bis 9.
